# DEMANDE DE BREVET EUROPEEN

(11) **EP 1 643 274 A2**
(43) Date de publication de la demande: **05.04.2006**
(21) Numéro de dépôt: 05109114.8
(22) Date de dépôt: 30.09.2005
(51) Int. Cl.: G01V 3/08

(54) **Procédé de mesure de positionnement d'un organe mobile dans un cadre et de détection d'un obstacle à proximité du cadre et/ou de l'organe mobile, système associé**

(30) Priorité: 01.10.2004 FR 0410407
(71) Demandeur: Magneti Marelli Systèmes Electroniques S.A.S, 86000 Chatellerault (FR)
(72) Inventeur: LEROY, Benoit, 86280, SAINT BENOIT (FR); Bianco, Patrick, 92140 Clamart (FR)
(74) Mandataire: Texier, Christian

(57) **Abrégé**

L'invention concerne un procédé de mesure de positionnement d'un organe (3) mobile dans un cadre (2) et de détection d'un obstacle à proximité du cadre (2) et/ou de l'organe mobile (3), comportant des étapes selon lesquelles :
- un module (7) électronique relié à au moins une électrode (10) apte à être montée sur le cadre (2) et/ou l'organe (3) mobile associé génère un signal électrique, l'électrode présentant une impédance électrique au module ;
- un capteur (70) du module (7) mesure la variation de l'impédance électrique présentée au module (7),
- caractérisé en ce qu'il comporte une étape selon laquelle :
des moyens de mesure de positionnement et de détection (79) déterminent la position de l'organe mobile (3) dans le cadre (2) en fonction de la mesure de la variation d'impédance donnée par le capteur (70).

L'invention concerne également un de mise en oeuvre du procédé.

## Description

### DOMAINE TECHNIQUE GENERAL

La présente invention concerne un procédé de mesure de positionnement d'un organe mobile dans un cadre et de détection d'un obstacle à proximité du cadre et/ou de l'organe mobile selon le préambule de la revendication 1.

Elle concerne également un système selon le préambule de la revendication 9.

### ETAT DE L'ART

On connaît des systèmes détecteurs d'un obstacle entre un cadre et un organe mobile associé.

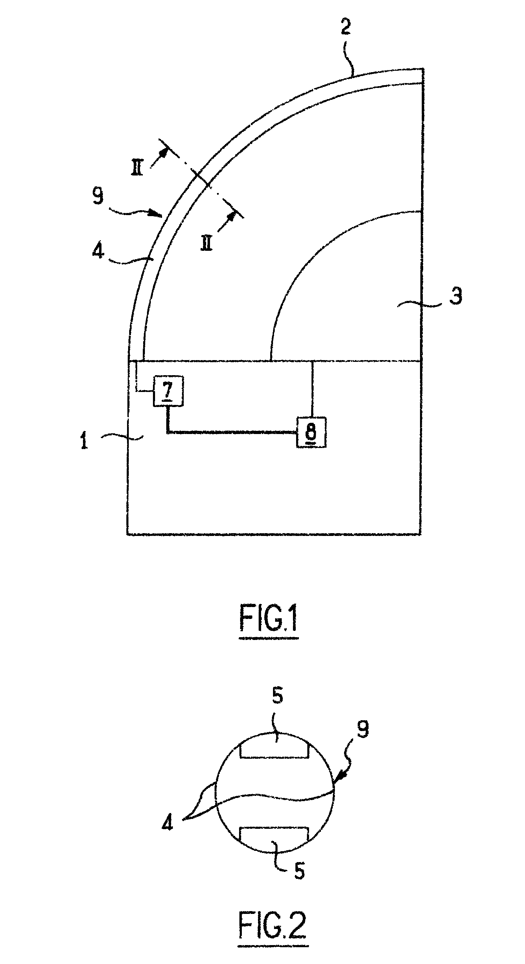

Un exemple d'un tel système, dans le cas d'une portière d'un véhicule, est représenté schématiquement aux figures 1 à 4.

On distingue ainsi, sur les figures 1 à 4, une portière 1 comportant un cadre 2 supérieur et un organe mobile associé 3. Dans l'exemple des figures 1 à 4, l'organe mobile 3 est une vitre de portière qui est actionnée par un moteur d'entraînement 8. Le moteur 8 permet de monter et de descendre la vitre 3 dans le cadre 2 de la portière 1.

Le cadre comporte un système 9 détecteur d'un obstacle. Dans le cas d'une portière de voiture, l'obstacle peut être une partie du corps d'un passager par exemple. Le système 9 est monté longitudinalement le long de la partie supérieure du cadre 2, du côté de l'organe 3.

Comme le montre la figure 2, le système 9 détecteur comporte principalement deux pistes 5 électriquement conductrices maintenues séparées au repos par des moyens souples élastiques 4 formant une structure sensiblement tubulaire fixée sur le cadre 2. Les pistes 5 sont fixées sur les parois internes des moyens élastiques 4, sur toute leur longueur. Les pistes 5 forment un interrupteur ouvert au repos.

Le système 9 détecteur comporte également un module de commande 7 relié d'une part aux pistes 5 et d'autre part au moteur 8. Le module 7 comporte des moyens appliquant une tension électrique entre les pistes 5.

La position de repos du système 9 correspond à la situation dans laquelle aucun obstacle n'est intercalé entre l'organe mobile 3 et le cadre 2. L'organe mobile est en position basse ou intermédiaire par rapport au cadre 2, et peut être actionné par le moteur 8.

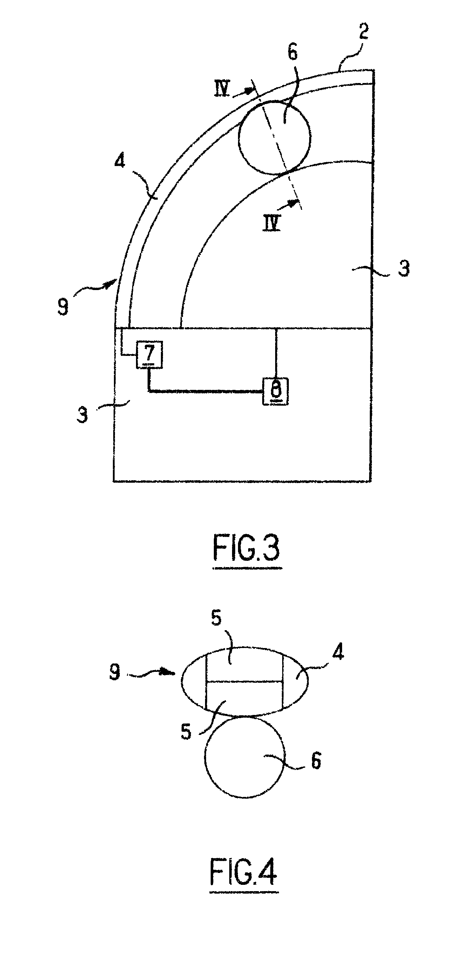

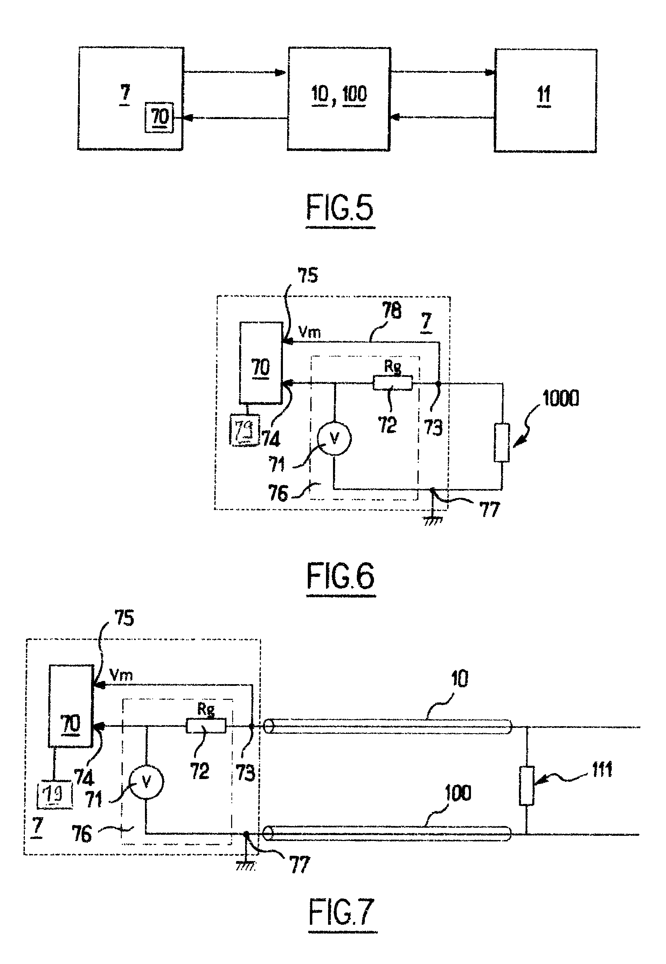

Les figures 3 et 4 montrent que lorsqu'un obstacle 6 est intercalé entre le cadre 2 et l'organe 3 lors de la montée de l'organe 3, les pistes 5 entrent en contact l'une avec l'autre du fait de la déformation des moyens souples 4.

L'entrée en contact des pistes 5 au niveau de l'obstacle 6 engendre un court-circuit qui est détecté par le module 7. Des moyens dans le module 7 vérifient alors la position de l'organe 3 par rapport au cadre 2 grâce au moteur 8 ― par exemple grâce à un compte-tours.

Dans le cas de la présence d'un obstacle 6, les moyens du module 7 détectent le court-circuit alors que l'organe 3 n'est pas dans sa position haute par rapport au cadre 2. Le module 7 provoque alors l'arrêt du moteur 8, voire une commande de celui-ci propre à abaisser l'organe 3.

On évite alors un écrasement fort de l'obstacle 6 entre le cadre 2 et l'organe 3, ou un endommagement du moteur 8.

D'autres systèmes sont également connus, et utilisent par exemple des ultrasons en lieu et place d'un courant électrique pour assurer la détection d'obstacle.

Des ultrasons sont envoyés dans une structure tubulaire souple fixée sur le cadre et similaire à la structure tubulaire 4 des figures 1 à 4. Lors de la déformation de la structure tubulaire due à la présence d'un obstacle entre la vitre et le cadre, le trajet des ultrasons dans la structure est modifié. Des moyens détectent cette modification et déterminent la position de l'organe mobile par rapport au cadre. Si l'organe mobile n'est pas en position haute, cela veut dire qu'un obstacle est présent entre l'organe mobile et le cadre, et le moteur d'entraînement est comme précédemment arrêté, voire inversé.

D'autres systèmes sont également possibles.

On peut ainsi utiliser une mesure de la position et de la vitesse de l'arbre moteur d'entraînement de l'organe à travers deux capteurs Hall permettant de remonter à la position et à la vitesse de l'arbre moteur (les capteurs Hall sont face à une bague magnétisée solidaire de l'arbre moteur). Lorsqu'un obstacle se présente, le mouvement de la vitre est freiné, ce ralentissement est détecté par le module électronique. En combinant cette information avec la position de la vitre (déterminée en relatif par le capteur de position qui travaille en relatif), un calculateur détermine si l'obstacle se trouve dans la zone d'antipincement (en haut du cadre), dans une situation de pincement (freinage du moteur) et s'il faut réaliser un renversement de l'entraînement de la vitre.

On peut enfin utiliser une mesure de la position et du courant du moteur. La mesure de la position est réalisée par un capteur Hall et la mesure de courant par un capteur de courant. Si la vitre se trouve dans la zone d'antipincement (haut du cadre) et que l'obstacle appuie sur la vitre et la ralentit, cela sera détecté par une variation du courant. En combinant les deux mesures de position et du courant, le calculateur détermine s'il doit réaliser un renversement de l'entraînement de la vitre.

Les systèmes précédents présentent cependant des inconvénients.

En effet, quelle que soit la rapidité d'arrêt du moteur d'entraînement dans le cas de la présence d'un obstacle, ce dernier est toujours un peu écrasé entre l'organe 3 et le cadre 2. Sans cet écrasement, la structure tubulaire n'est pas déformée ou la vitre n'est pas ralentie et l'obstacle n'est pas détecté.

Il s'ensuit que l'obstacle peut être endommagé. De plus, dans le cas où l'obstacle est la partie d'un corps d'un passager, cela peut être très gênant du point de vue de la sécurité, notamment pour les très jeunes enfants.

US 5 621 290 divulgue une technique de détection d'obstacles utilisant la variation de la valeur d'un champ électrique émis par une électrode montée sur une vitre ou sur un cadre et reliée à un oscillateur. La présence d'un obstacle entre la vitre et le cadre provoque une variation de la valeur du champ et provoque l'arrêt du déplacement de la vitre.

Une telle technique requiert la présence d'un obstacle volumineux ou d'un type particulier pour que la détection puisse s'effectuer. Dans le cas d'un obstacle qui n'est pas facilement détectable par une variation de champ, il est possible que l'obstacle soit détérioré.

### PRESENTATION DE L'INVENTION

L'invention propose de pallier ces inconvénients.

Un but de l'invention est de proposer un système de détection d'obstacle qui ne provoque pas d'écrasement, même léger, dudit obstacle.

A cet effet, on propose selon l'invention un procédé selon la revendication 1.

Des modes préférentiels de mise en oeuvre du procédé sont revendiqués dans les revendications secondaires.

L'invention concerne également un système de mise en oeuvre du procédé selon la revendication 9.

Des modes de réalisation préférentiels sont présentés dans les revendications dépendantes.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- les figures 1 à 4, déjà commentées, représentent un système détecteur d'obstacle selon l'art antérieur, les figures 2 et 4 étant des vues selon les coupes ll et IV des figures 1 et 3 respectivement;
- la figure 5 représente schématiquement les éléments principaux d'un système détecteur d'obstacle selon l'invention;
- la figure 6 représente schématiquement la composition d'un module électronique d'un système détecteur selon l'invention, avec une impédance électrique présentée au module électronique;
- la figure 7 représente schématiquement un mode de réalisation de l'invention comportant deux électrodes;
- la figure 8 représente schématiquement un mode de réalisation de l'invention comportant une seule électrode, l'électrode étant montée sur un organe mobile d'une portière de voiture;
- la figure 9A représente schématiquement le schéma équivalent du mode de réalisation de la figure 8 en absence d'électrode de masse;
- la figure 9B représente schématiquement le mode de réalisation de la figure 9A sous forme du schéma équivalent de la figure 6 ;
- la figure 10A représente schématiquement le montage équivalent de l'impédance de l'électrode de la figure 8 lorsque l'obstacle est à l'extérieur d'un véhicule, proche de l'électrode ;
- la figure 10B représente schématiquement le mode de réalisation de la figure 10A sous forme du schéma équivalent de la figure 6 ;
- la figure 11A représente schématiquement le montage équivalent de l'impédance de l'électrode de la figure 8 lorsque l'obstacle est à l'intérieur d'un véhicule, proche de l'électrode ;
- la figure 11B représente schématiquement le mode de réalisation de la figure 11A sous forme du schéma équivalent de la figure 6 ;
- la figure 12 représente schématiquement le montage équivalent de l'impédance de l'électrode de la figure 8 lorsque l'obstacle est à l'extérieur du véhicule, mais éloigné de l'électrode.
- la figure 13 représente schématiquement une courbe d'apprentissage de la valeur donnée par le capteur en fonction de la position de l'organe dans le cadre ;
- la figure 14 montre la mise en place de courbes limites sur une courbe selon la figure 13 ;
- les figures 15 montrent un recalage des courbes limites lors de la vie du système ;
- la figure 16 montre la détection d'un obstacle par un écart par rapport à une position attendue de l'organe dans le cadre ;
- les figures 17 montrent différentes stratégies de détection d'obstacles ; et
- la figure 18 montre la mise en place d'un réseau de seuils et de courbes limites.

Sur l'ensemble des figures, les éléments similaires portent des références numériques identiques.

### DESCRIPTION DETAILLEE

La figure 5 représente schématiquement les éléments principaux d'un système détecteur et de mesure de positionnement selon l'invention, ainsi que leurs interactions avec l'extérieur.

On distingue ainsi sur la figure 5 qu'un système selon l'invention comporte principalement deux éléments. Le premier élément est un module électronique 7 générant principalement un signal électrique. Le deuxième élément principal d'un système détecteur et de mesure de positionnement selon l'invention est au moins une électrode 10 ou 100 qui est apte à permettre la mesure de la proximité d'un obstacle vis-à-vis de ladite électrode.

Le schéma blocs de la figure 5 montre que chaque électrode 10 ou 100 est en interaction avec l'environnement, référencé par 11. Dans la suite de la présente description, on entend par « environnement » à la fois l'air ambiant, un châssis de véhicule, une personne, un obstacle physique, etc.

Comme le montrent les flèches de la figure 5, le module 7 alimente électriquement chaque électrode 10 ou 100, de sorte que les électrodes 10 ou 100 créent un champ électrique proche dans l'environnement 11. L'environnement 11 influe à son tour sur le champ proche de chaque électrode 10 ou 100. Chaque électrode 10 ou 100 répercute les modifications de champ par une modification de l'impédance électrique qu'elle présente au module 7. Le module 7 comporte des moyens 70 aptes à mesurer ladite variation d'impédance, et par conséquent la présence d'un éventuel obstacle à proximité de l'électrode.

La figure 6 représente schématiquement la composition d'un module électronique d'un système détecteur selon l'invention, avec une impédance électrique 1000 équivalente branchée au module électronique.

Sur la figure 6, le module électronique 7 alimente électriquement une impédance électrique 1000 équivalente résultant de la présence d'une ou de deux électrodes dans le système selon l'invention, et dont la valeur varie en fonction de l'influence de l'environnement sur la ou lesdites électrodes. L'impédance 1000 est reliée au module électronique 7 par deux bornes référencées par 73 et 77. La borne 77 fait office de masse du module électronique 7.

Le module électronique 7 comporte principalement un générateur 76, constitué d'une source de tension 71 en série avec une résistance série 72, qui produit le signal électrique. Les bornes du générateur 76 sont reliées aux bornes 73 et 77 pour l'alimentation de l'impédance 1000.

Ainsi, le générateur 76 comporte une source de tension 71 montée en série avec une résistance 72. La source de tension 71 est apte à générer un signal électrique basse fréquence, sinusoïdal. La fréquence du signal électrique générée par la source 71 se situe dans le domaine des basses fréquences (125 kHz par exemple). La résistance série 72 a une valeur connue Rg.

La figure 6 montre également que le module 7 comporte un capteur 70 apte à mesurer la valeur Z de l'impédance 1000 présentée au module 7. A cet effet, le capteur 70 comporte d'une part une borne 75 reliée directement à l'impédance 1000 grâce à une connexion 78 reliée à la borne 73, ainsi que d'autre part une borne 74 reliée à la résistance série 72 du générateur 76. La borne 74 du capteur 70 est reliée à la résistance série 72 en amont de la borne 73 par rapport à la résistance 72, en sortie directe de la source de tension 71.

La borne 75 mesure le signal Vm entre les bornes 77 et 73, à savoir le signal aux bornes de l'impédance 1000, tandis que la borne 74 mesure le signal V délivré par le générateur de tension.

La mesure des signaux V et Vm permet de mesurer la valeur Z de l'impédance 1000, la valeur Rg de la résistance 72 étant par ailleurs connue.

Le module 7 comporte des moyens mesure de positionnement et de détection 79 aptes à déterminer la position de l'organe mobile 3 dans le cadre 2 en fonction de la mesure de la variation d'impédance donnée par le capteur 70.

La mesure de positionnement peut s'effectuer au cours d'une phase initiale d'apprentissage de la position de l'organe mobile, sans obstacle. L'information de la position est déterminée à partir de la valeur du capteur 70.

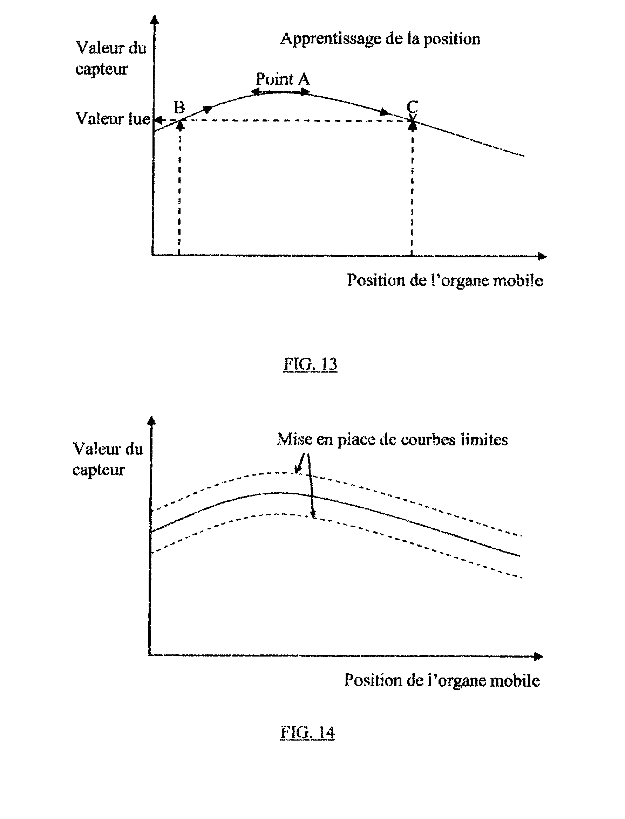

Les moyens 79 peuvent réaliser des mémorisations lors du passage de l'organe en des points particuliers pour partitionner la courbe en éléments permettant de remonter à la position de l'organe de manière non ambiguë. Par exemple sur la figure 13, la valeur lue du capteur peut correspondre au point B ou C de la courbe. Mais l'information (mémorisée) indiquant que l'organe a passé le point A dans le sens des positions croissantes permet de conclure que c'est le point C qui est à considérer.

La figure 14 montre qu'on peut constituer ensuite des courbes limites, représentées en traits pointillés.

Les courbes limites sont construites à partir de tables de références, d'estimations polynomiales ou autres. Elles sont associées aux comportements limites du mouvement sans obstacle. Les comportements limites peuvent intégrer les pires cas de fonctionnement de l'organe mobile, à savoir, entre autres, les frottements minimal et maximal sur l'organe mobile, le niveau d'énergie minimal et maximal de l'alimentation du moteur 8 et tout autre paramètre influant sur la courbe de la figure 13.

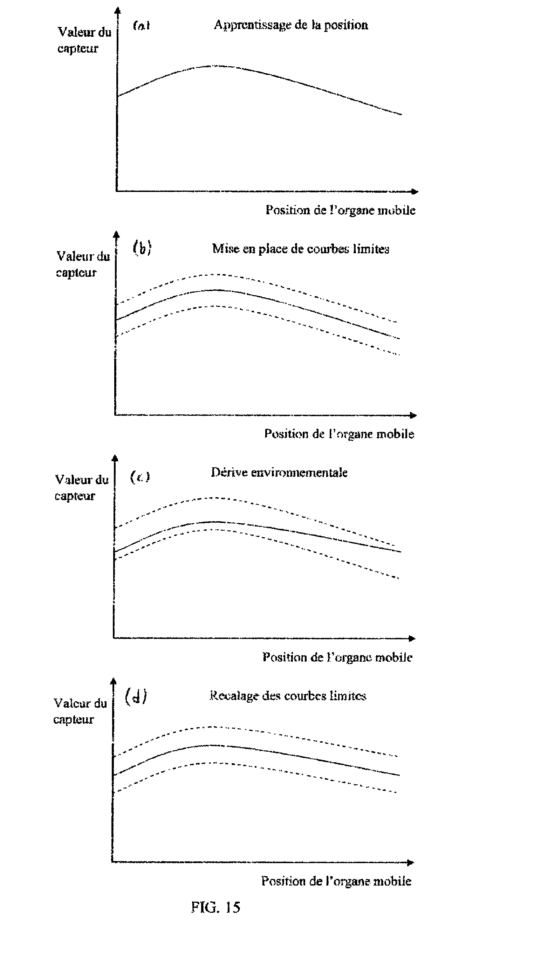

Les figures 15a à 15d montrent qu'une stratégie de compensation/recalage des variations de l'environnement (liées à l'humidité, à l'usure des joints, à la poussière, ou à d'autres phénomènes) peut être mise en oeuvre au cours de la vie du système pour recaler la courbe de référence et fixer à nouveau les courbes limites. Ainsi, la figure 15a représente la mise en place de l'apprentissage de la mesure du capteur en fonction du positionnement de l'organe. La figure 15b montre la mise en place des courbes limites. La figure 15c montre une dérive environnementale au cours de la vie du système. La figure 15d montre un recalage des courbes limites pour prendre en compte la dérive.

La compensation pourra avantageusement être mise en oeuvre lors d'un mouvement automatique sans obstacle ou lorsque la partie mobile atteint un point de référence (butée mécanique par exemple) dans le cas d'une portière automobile.

Les courbes des figure 13 à 15 peuvent bien entendu subir du conditionnement et/ou du traitement de signal et/ou du filtrage et/ou des transformées pour améliorer leur qualité.

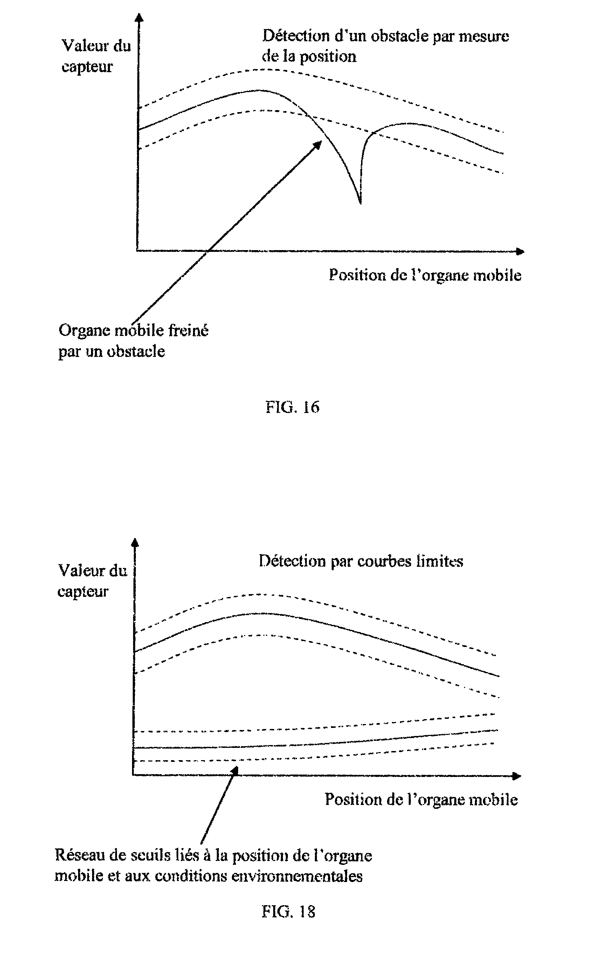

Les moyens 79 sont de plus aptes à détecter la présence d'un obstacle à proximité du cadre 2 et/ou de l'organe mobile 3 en utilisant la détermination de la position de l'organe mobile dans le cadre, en identifiant un écart de la trajectoire de l'organe mobile vis-à-vis d'une trajectoire attendue de l'organe mobile. Une détection par un tel écart est représentée sur la figure 16.

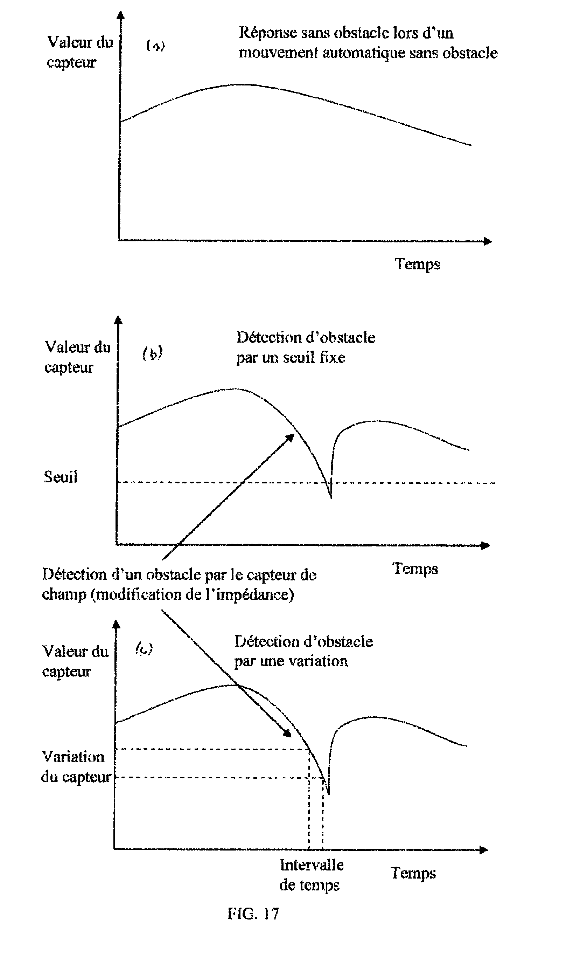

Les figures 17a à 17c montrent que les moyens de mesure de positionnement et de détection 79 sont en outre aptes à détecter la présence d'un obstacle lors d'une variation importante (figure 17b) ou rapide (figure 17c) de l'impédance de l'électrode, c'est à dire lorsque l'amplitude de la variation et/ou la vitesse de la variation sont supérieures à un seuil. Dans le cas de la figure 17b, l'obstacle est détecté car la valeur donnée par le capteur est inférieure à un seuil donné de l'impédance. Dans le cas de la figure 17c, l'amplitude de la variation et/ou la vitesse de la variation sont supérieures à un seuil, à savoir que la variation de la valeur donnée par le capteur est importante dans un intervalle de temps très court.

La détection peut faire appel à d'autres concepts (traitement du signal, filtrages, transformées et notamment transformées en ondelettes ou autres procédés) pour améliorer sa quaüté.

La figure 18 montre que les stratégies de détection d'obstacles par une mesure d'impédance (par seuil fixe comme sur le cas de la figure 17b ou par variation comme sur le cas de la figure 17c, ou autre) peuvent être associées au principe des courbes limites pour réaliser une détection de l'obstacle dont le critère de détection (seuil fixe ou variation ou autre) est paramétré aux conditions environnementales.

Le seuil peut dépendre de la position courante de la partie mobile, des conditions environnementales et de paramètres d'évolution liés au système (par exemple, une estimation de la variation dans le temps des frottements du joint pour une portière).

Comme on l'a vu, les moyens 79 sont aptes à mesurer la position de l'organe mobile et la proximité d'un obstacle.

Un premier mode de détection de la proximité d'un obstacle est la détection par la variation de l'impédance pour les obstacles présentant une impédance facilement mesurable. Un deuxième mode est la mesure de la position de l'organe mobile freiné par un obstacle (obstacle difficilement détectable par la mesure d'impédance).

Les deux modes sont associés pour réaliser le contrôle de l'organe mobile.

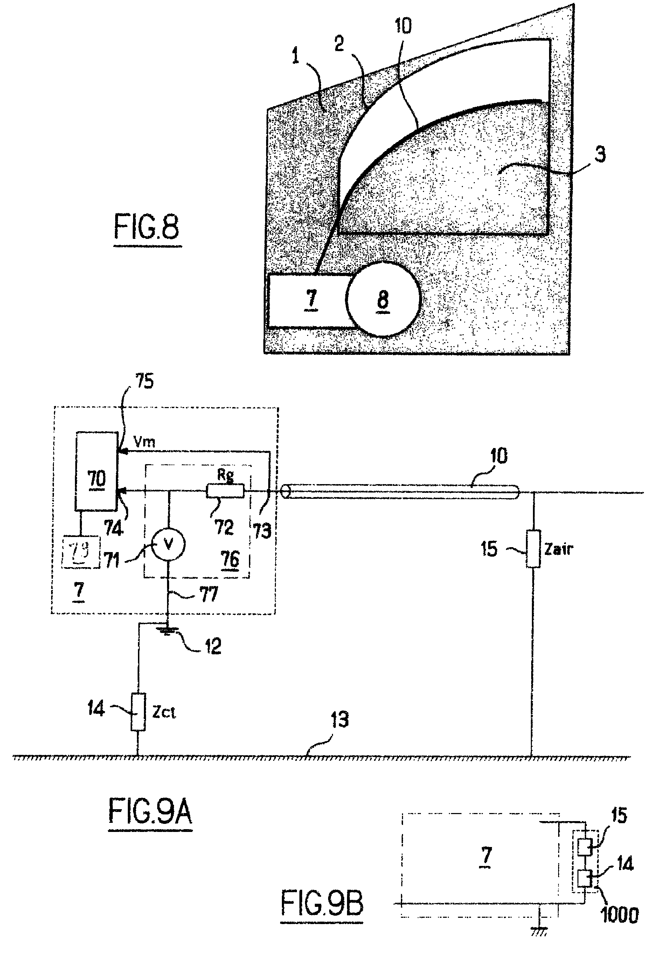

La figure 7 montre un premier exemple de mode de réalisation d'un système de détecteur d'un obstacle mettant en oeuvre les principes de la figure 6.

Sur la figure 7, les éléments du module électronique 7 restent identiques à ceux de la figure 6.

Le module électronique 7 alimente dans le cas de la figure 7 deux électrodes 10 et 100 reliées entre elles par une impédance 111 correspondant à l'impédance de l'air Zair.

Une des deux électrodes 100 fait office d'électrode de masse et est reliée à la borne 77. L'électrode 100 peut être située sur un cadre, tandis que l'électrode 10 peut être située sur une partie supérieure d'un organe mobile associé. Par exemple, dans le cas d'une portière de voiture, l'électrode 100 peut être située sur le cadre de la portière ou directement sur le châssis, et l'électrode 10 sur la tranche supérieure d'une vitre mobile dans le cadre.

Les deux électrodes 10 et 100 présentent une impédance électrique au module 7 d'autant plus importante que la distance les séparants est grande.

La figure 8 représente un mode de réalisation dans lequel l'électrode unique 10 est montée sur la partie supérieure d'un organe mobile 3 ― par exemple la vitre - d'une portière 1 de véhicule automobile comportant un cadre 2. L'électrode 10 peut se situer sur toute zone de l'organe mobile. Elle peut ainsi se situer sur la partie interne et/ou externe de ce dernier. Elle peut également être noyée dans la masse de l'organe mobile.

L'électrode peut être constituée d'une partie conductrice localisée, comme par exemple un conducteur électrique et/ou une piste et/ou une autre technologie de réalisation d'un conducteur sur l'organe mobile ou autre. L'électrode peut également être constituée d'une partie conductrice répartie, comme par exemple une dépose en couche mince conductrice sur l'organe mobile ou autre.

Avantageusement, au moins une partie des éléments de dégivrage d'une vitre de portière peuvent former une électrode.

Comme on l'a vu, le détecteur est utilisé selon un double mode. Un premier mode est l'utilisation en tant que détecteur d'obstacles, et un second mode est l'utilisation en tant que capteur de position absolue de l'organe mobile dans le cadre. La détection et la mesure du positionnement sont effectuées par les moyens 79.

Dans le premier mode, les moyens 79 détectent une variation importante ou rapide de l'impédance de l'électrode.

Dans le second mode, on utilise le fait que l'électrode, par exemple située sur l'organe mobile, est influencée par l'environnement, et notamment les parties conductrices de la portière 1 et du cadre 2, dans le cas d'une portière de véhicule. Une montée et/ou une descente sera vue par l'électrode selon un certain profil qui rendra compte de sa position dans le cadre 2.

On a vue que des algorithmes de traitement de l'information de l'électrode sont mis en oeuvre. Les algorithmes classiques peuvent être du type apprentissage et/ou être des tables de référence et/ou des compensations environnementales et/ou du conditionnement et/ou du traitement de signal et/ou filtrage et/ou transformées par exemple.

Il est alors possible de remonter à l'information de la position de la vitre. A partir de la position de l'organe mobile, il est possible de mettre en place une stratégie de contrôle pour détecter un obstacle, notamment lorsque celui-ci n'est pas facilement détectable (de par sa nature) par le capteur utilisé selon le premier mode.

L'organe 3 est entraîné en déplacement par un moteur 8. On comprend que l'application à une portière d'un véhicule est donnée à titre d'exemple et que l'électrode unique peut être montée sur n'importe quel organe mobile dans un cadre. Dans le mode de réalisation de la figure 8, on simplifie le système détecteur de la figure 7 en supprimant l'électrode de masse 100, la masse du système étant alors reliée au châssis du véhicule.

La figure 9A montre que les éléments du module 7 restent identiques à ceux de la figure 6. L'électrode 10 reste alimentée par le générateur 76 entre la borne 73 et la borne 77. La borne 77 qui constitue la masse du générateur 76 est reliée au châssis 12 du véhicule. Le châssis 12 du véhicule peut être formé du cadre 2 ou d'une quelconque partie conductrice de la portière 1 ou du véhicule.

La continuité électrique dans un circuit comportant l'électrode 10 est assurée par les impédances électriques suivantes.

L'impédance 14 matérialise les impédances entre le châssis 12 et la terre 13. L'impédance 14 a une valeur Zct. L'impédance 15 matérialise un regroupement des impédances entre l'électrode 10 et la terre 13 d'une part et l'électrode 10 et le châssis 12 d'autre part. L'impédance 15 a une valeur Zair.

La figure 9B représente schématiquement le mode de réalisation de la figure 9A sous forme du schéma équivalent de la figure 6. On voit donc que lorsqu'il n'y a aucun objet ou obstacle à proximité de l'électrode 10, on se ramène au cas de la figure 6 en mettant en série les impédances 14 et 15. La valeur de l'impédance équivalente présentée au module en l'absence d'obstacle à proximité de l'électrode 10 est donc égale à Zct + Zair.

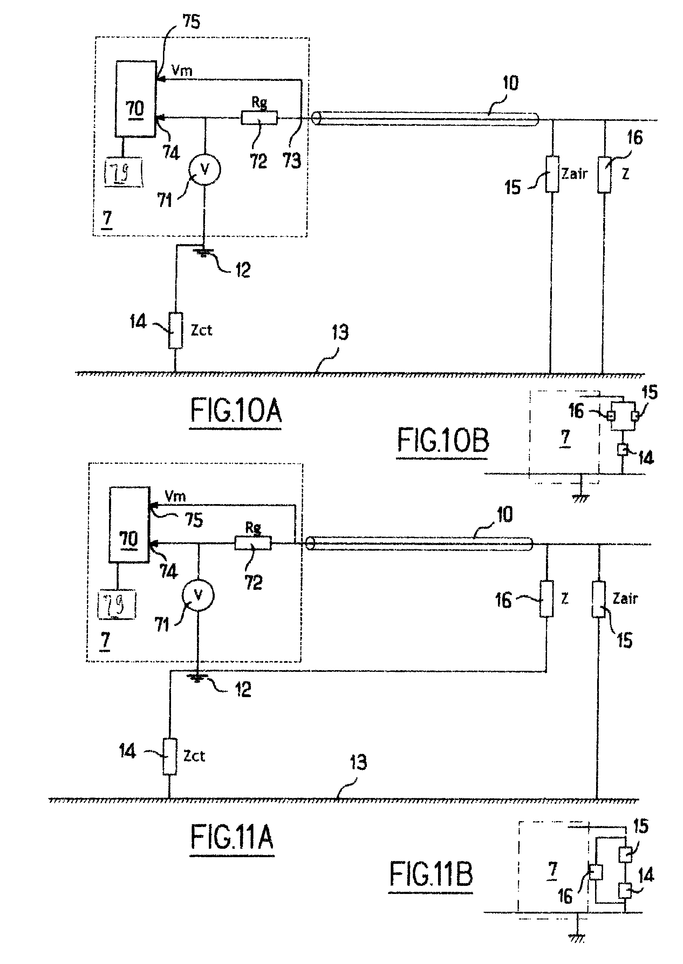

Les figures 10A à 12 représentent schématiquement plusieurs cas de figures de détection en fonction de la position d'un obstacle par rapport à l'électrode 10.

La figure 10A représente le cas où une personne à l'extérieur du véhicule s'approche de l'électrode 10. Une personne à l'extérieur du véhicule est liée à la terre 13. Elle ramène une impédance de valeur Z matérialisée par l'impédance 16. L'impédance du modèle du corps humain est par exemple constituée d'une capacité en série avec une résistance.

La figure 10B représente schématiquement le mode de réalisation de la figure 10A sous forme du schéma équivalent de la figure 6. On voit donc que la valeur de l'impédance présentée au module 7 est modifiée par rapport au cas de la figure 9B. L'impédance 16 additionnelle est en effet branchée en parallèle de l'impédance 15.

La modification de la valeur de l'impédance équivalente présentée par l'électrode 10 au module sera détectée par le système détecteur. Le système détecteur peut alors en déduire la présence de l'obstacle à proximité de l'organe mobile et arrêter le moteur d'entraînement 8.

Les moyens de mesure de positionnement et de détection 79 détectent la présence d'un obstacle lors d'une variation importante ou rapide de l'impédance de l'électrode. On se situe alors dans le premier mode d'utilisation. Les moyens de mesure de positionnement et de détection 79 détectent la présence de l'obstacle lorsque l'amplitude de la variation et/ou la vitesse de la variation sont supérieures à un seuil.

Lorsque l'obstacle n'est pas simplement détectable par ce type de mesure, le système peut utiliser le second mode. Il s'agit alors d'utiliser la mesure de la position de l'organe mobile, pour en déduire la présence d'un obstacle qui modifie le mouvement normal de l'organe, en identifiant un écart de la trajectoire de l'organe mobile vis-à-vis d'une trajectoire attendue.

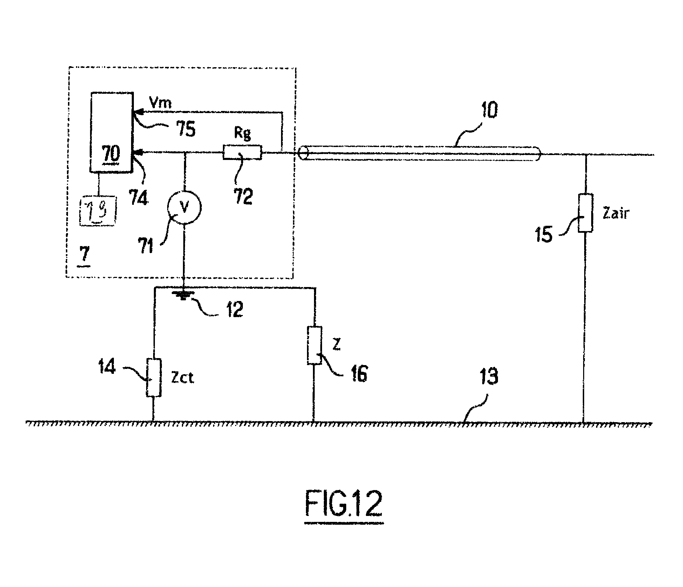

La figure 11A représente le cas d'une personne ou d'un objet formant obstacle situé à l'intérieur du véhicule et s'approchant de l'électrode 10.

Cette personne est liée au châssis 12 et non plus à la terre 13.

La figure 11B représente schématiquement le mode de réalisation de la figure 11A sous forme du schéma équivalent de la figure 6. L'impédance 16 additionnelle est mise en parallèle des deux impédances 14 et 15 en série. Là encore, le module 7 est apte à repérer une variation de l'impédance qui lui est présentée par l'électrode 10.

La figure 12 représente schématiquement le cas où une personne à l'extérieur du véhicule s'approche du châssis 12 du véhicule et non plus de l'électrode 10.

Cette personne amène une impédance 16 d'une valeur Z (on rappelle que l'impédance du modèle du corps humain est par exemple constituée d'une capacité en série avec une résistance). Cette impédance 16 est branchée entre le châssis 12 et la terre 13, puisque la personne à l'intérieur du véhicule est liée à la terre 13. Cependant, la valeur capacitive de l'impédance 14 est tellement importante devant la valeur capacitive de l'impédance 16, que l'impact sur la valeur globale de l'impédance équivalente présentée au module 7 est négligeable lors de la mesure. Ainsi, une personne s'approchant du châssis 12 et non pas de l'électrode 10 ne sera pas repérée par le module 7.

Plusieurs autres cas sont possibles lorsqu'une personne s'approchant du véhicule intercale un obstacle entre le cadre 2 et l'organe mobile 3.

Si la personne se situe en dehors du véhicule, on se ramène alors au cas des figures 10A et 10B.

Si la personne se situe dans le véhicule, on se ramène alors au cas des figures 11A et 11B.

Enfin, si l'obstacle n'est pas intercalé entre le cadre et l'organe, on se rapporte alors au cas des figures 9A et 9B à vide et le fonctionnement de l'organe mobile n'est pas modifié.

On voit donc qu'on détecte un obstacle dès qu'il est à proximité de l'électrode, à savoir l'organe mobile. Lorsque l'obstacle n'est pas simplement détectable par ce type de mesure, le système peut utiliser le second mode, utilisant la mesure de la position de l'organe mobile pour en déduire la présence d'un obstacle qui modifie le mouvement normal de la vitre, en identifiant un écart de la trajectoire de l'organe mobile vis-à-vis d'une trajectoire attendue.

Les développements qui précèdent décrivent une liaison entre chaque électrode et le module qui est du type filaire. Bien entendu, une liaison sans contact est également possible (par couplage capacitif ou magnétique ou par transmission de radiofréquences).

## Revendications

1. Procédé de mesure de positionnement d'un organe (3) mobile dans un cadre (2) et de détection d'un obstacle à proximité du cadre (2) et/ou de l'organe mobile (3), comportant des étapes selon lesquelles :
- un module (7) électronique relié à au moins une électrode (10) apte à être montée sur le cadre (2) et/ou l'organe (3) mobile associé génère un signal électrique, l'électrode présentant une impédance électrique au module ;
- un capteur (70) du module (7) mesure la variation de l'impédance électrique présentée au module (7),
- **caractérisé en ce qu'**il comporte une étape selon laquelle :
- des moyens de mesure de positionnement et de détection (79) déterminent la position de l'organe mobile (3) dans le cadre (2) en fonction de la mesure de la variation d'impédance donnée par le capteur (70).

2. Procédé selon la revendication précédente, dans lequel les moyens de mesure de positionnement et de détection (79) déterminent la position de l'organe mobile par un apprentissage et/ou des tables de référence et/ou des compensations environnementales et/ou du conditionnement et/ou du traitement de signal et/ou du filtrage et/ou des transformées.

3. Procédé selon l'une des deux revendications précédentes, comportant une étape selon laquelle les moyens de mesure de positionnement et de détection (79) détectent la présence d'un obstacle à proximité du cadre (2) et/ou de l'organe mobile (3) en utilisant la détermination de la position de l'organe mobile dans le cadre.

4. Procédé selon la revendication précédente, dans lequel les moyens de mesure de positionnement et de détection (79) détectent la présence de l'obstacle en identifiant un écart de la trajectoire de l'organe mobile vis-à-vis d'une trajectoire attendue de l'organe.

5. Procédé selon l'une des revendications précédentes, dans lequel les moyens de mesure de positionnement et de détection (79) détectent en outre la présence d'un obstacle lors d'une variation importante ou rapide de l'impédance de l'électrode.

6. Procédé selon la revendication précédente, dans lequel les moyens de mesure de positionnement et de détection (79) détectent la présence de l'obstacle lorsque l'amplitude de la variation et/ou la vitesse de la variation sont supérieures à un seuil.

7. Procédé selon l'une des deux revendications précédentes, dans lequel la détection utilise un conditionnement et/ou du traitement de signal et/ou du filtrage et/ou des transformées.

8. Procédé selon l'une des quatre revendications précédentes, dans lequel le module (7) stoppe et/ou inverse le déplacement de l'organe (3) en cas de détection d'un obstacle.

9. Système de mesure de positionnement d'un organe (3) mobile dans un cadre (2) et de détection d'un obstacle à proximité du cadre (2) et/ou de l'organe mobile (3), comportant :
- au moins une électrode (10) apte à être montée sur le cadre (2) et/ou l'organe (3) mobile associé ;
- un module (7) électronique relié à l'électrode et apte à générer un signal électrique, l'électrode présentant une impédance électrique au module ;
- un capteur (70) du module (7) apte à mesurer la variation de l'impédance électrique présentée au module (7),
**caractérisé en ce qu'**il comporte des moyens de mesure de positionnement et de détection (79) aptes à déterminer la position de l'organe mobile (3) dans le cadre (2) en fonction de la mesure de la variation d'impédance donnée par le capteur (70).

10. Système selon la revendication précédente, dans lequel les moyens de mesure de positionnement et de détection (79) sont de plus aptes à détecter la présence d'un obstacle à proximité du cadre (2) et/ou de l'organe mobile (3) en utilisant la détermination de la position de l'organe mobile dans le cadre en identifiant un écart de la trajectoire de l'organe mobile vis-à-vis d'une trajectoire attendue de l'organe mobile.

11. Système selon l'une des deux revendications précédentes, dans lequel les moyens de mesure de positionnement et de détection (79) sont en outre aptes à détecter la présence d'un obstacle lors d'une variation importante ou rapide de l'impédance de l'électrode.

12. Système selon la revendication précédente, dans lequel les moyens de mesure de positionnement et de détection (79) sont aptes à détecter la présence de l'obstacle lorsque l'amplitude de la variation et/ou la vitesse de la variation sont supérieures à un seuil.

13. Système selon l'une des quatre revendications précédentes, dans lequel l'électrode est formée au moins partiellement par des éléments de dégivrage d'une vitre de portière de véhicule.
